Europäisches Patentamt

European Patent Office

Office européen des brevets

(11) Publication number: **0 231 962**
**A1**

(12) **EUROPEAN PATENT APPLICATION**

(21) Application number: **87200042.7**

(22) Date of filing: **14.01.87**

(51) Int. Cl.4: **F24H 1/22**

(30) Priority: **20.01.86 NL 8600108**
**21.11.86 NL 8602966**

(43) Date of publication of application:
**12.08.87 Bulletin 87/33**

(84) Designated Contracting States:
**DE FR GB IT NL**

(71) Applicant: **Burnham Europe B.V.**
**Gildenstraat 15**
**NL-3861 RG Nijkerk(NL)**

(72) Inventor: **Bergman, Johannes Marinus**
**Postweg 18**
**NL-3881 EC Putten(NL)**

(74) Representative: **Reynvaan, Lambertus**
**Johannes, Ir. et al**
**EXTERPATENT Willem Witsenplein 4**
**NL-2596 BK 's-Gravenhage(NL)**

(54) **Heater with tap water supply and a heat exchanger for such a heater.**

(57) The invention relates to a heater with tap water supply, comprising a combustion chamber (2) being provided with a burner (3) and having an outlet (5) for the flue gases. In said combustion chamber is arranged a heat exchanger (4) for a heating medium, consisting of a number of parallel pipe lengths, which are connected to each other by means of connecting parts (8, 8'). Some of the pipe lengths are provided with a pipe (10, 10') for tap water which extends coaxially herein. The pipes for tap water are connected together to form a channel for tap water to be heated. Said pipes for tap water lying coaxially inside the respective pipe lengths each extend right through the connecting parts and are sealed off relative said connecting parts, said pipes being connected to each other outside the connecting parts. The invention also relates to a heat exchanger for such a heater, in which each pipe length which contains a pipe for tap water consists of a thick-walled pipe part having a central passage (23) for tap water and axial channels (18) in the thick wall for heating medium.

_FIG:1._

## Heater with tap water supply and a heat exchanger for such a heater

The present invention relates to a heater with tap water supply, comprising a combustion chamber being provided with a burner and having an outlet for the flue gases, and in which combustion chamber is fitted a heat exchanger for a heating medium, which consists of a number of parallel pipe lengths extending between two opposite walls of the combustion chamber and are connected to each other by means of connecting parts which form chambers, and successively are flowed through by the heating medium, while a number of these pipe lengths are provided with a pipe for tap water which extends coaxially herein, said pipes for tap water being connected together to form a throughgoing channel which is connected at one side to an infeed and at the other side to a discharge for tap water.

The problem occurring with such heaters is the complex structure of the heat exchanger, since the heat exchanger for the tap water is in fact integrated in the heat exchanger for the heating medium. This problem·is all the more important since parts of the heat exchanger coming into contact with flue gases are made of an aluminum alloy, while the pipes for the tap water must be made of copper. The presence of copper in the vicinity of aluminum in an oxygen-rich environment causes the aluminum to be affected (dissolved), as a result of the potential difference between the two materials.

The object of the invention is to produce a heater in which the problem outlined above is avoided in a practical manner, and which also ensures good heat transfer both to the heating medium and to the tap water.

Another object of the invention is to produce a heater of a compact structure which is easy to produce and assemble.

The above objects are achieved according to the invention through the fact that the pipes for tap water lying coaxially inside the particular pipe lengths each extend right through the connecting parts, said pipes being connected to each other outside the connecting parts.

Through the fact that the pipes for the tap water run through to the outside of the connecting parts, these pipes can easily be connected to each other, in which case the connecting parts do not come into contact with the heating medium.

Each pipe length, which contains a pipe for tap water, preferably consists of a thick-walled pipe part which is provided with external ribs and has a central passage which forms the pipe for the tap water, the pipe part having at both ends a thin-walled part with smaller diameter, and provision being made in the thick-walled part for a number of axial channels for the heating medium, which debouch on the outer periphery of the thin-walled parts into the chambers of the connecting parts connected thereto, while the thin-walled parts extend right through the connecting parts.

This construction has the advantage that both the heating medium and the tap water are heated directly through the wall of the pipe length, so that good heat transfer is ensured to both media.

According to the invention, each pipe length is made of an aluminum alloy, and the pipe for the tap water is provided with an internal copper lining. The pipes forming the channel for the tap water are thus designed as bimetal pipes, so that the problem of corrosion of the aluminum does not occur. The connecting pieces between the pipes can now consist of copper bends, since these bends are not in contact with the aluminum through heating medium.

In order to be able also to cool the flue gases to below their condensation temperature when the heater is working only as a hot water supply, according to the invention the infeed for tap water is connected to the pipe for tap water which is situated inside the pipe length which last comes into contact with the flue gases.

In this way, during the drawing of tap water a geyser is produced which cools the flue gases to below dew point, so that one could speak of a "high-efficiency geyser".

The invention is also embodied in a heat exchanger which is characterized in that it consists of a number of thick-walled parallel pipe lengths which are connected to each other by connecting parts which form chambers and each have in their wall one or more axial passages which debouch into the chambers of the connecting parts connecting hereto, and the central passage of each pipe which forms a channel for tap water is extended beyond the connecting parts, and said passages are connected together.

The invention is explained in greater detail with reference to the drawing, in which:

Figure 1 shows schematically a heater according to the present invention;

Figure 2 shows a detail of the heater of Figure 1;

Figure 3 shows a view according to line III-III in figure 2;

Figure 4 shows a cross section of part of another embodiment of the heat exchanger according to the invention;

Figure 5 shows a cross section along the line V-V in figure 4;

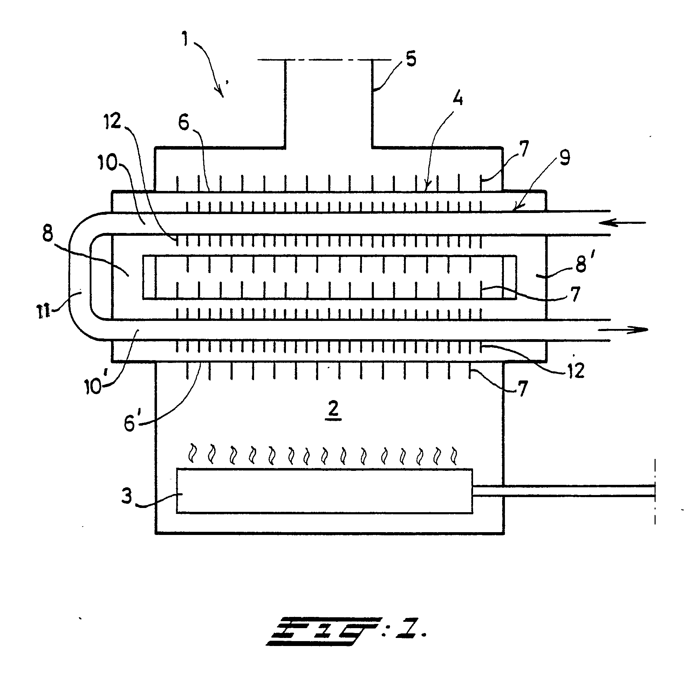

Figure 1 shows schematically a heater 1, comprising a combustion chamber 2, in which are fitted a burner 3 and a heat exchanger 4 for a heating medium. The combustion chamber also has an outlet 5 for the flue gases.

The heat exchanger 4 consists of a number of parallel pipe lengths 6, 6', provided with ribs 7 on the outside. The pipe lengths are connected to each other by means of connecting parts 8, 8' and are flowed through in succession by the heating medium in such a way that the cold heating medium enters the heat exchanger through the pipe lengths which last come into contact with the flue gases.

The heat exchanger 4 for heating medium is combined with a heat exchanger 9 for the tap water. The heat exchanger 9 is formed by a pipe part 10, 10' inside each pipe length 6, 6', so that two channels are produced in each pipe length. The outermost channel is here flowed through by heating medium and the central channel by tap of service water. The various pipe parts are connected to each other by bends 11.

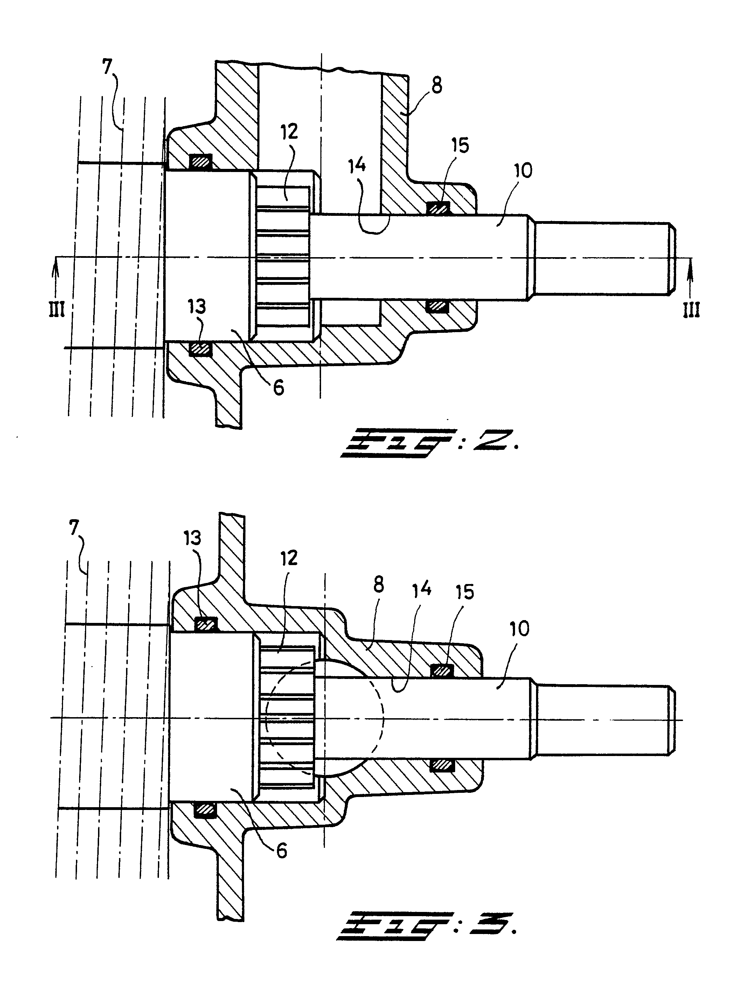

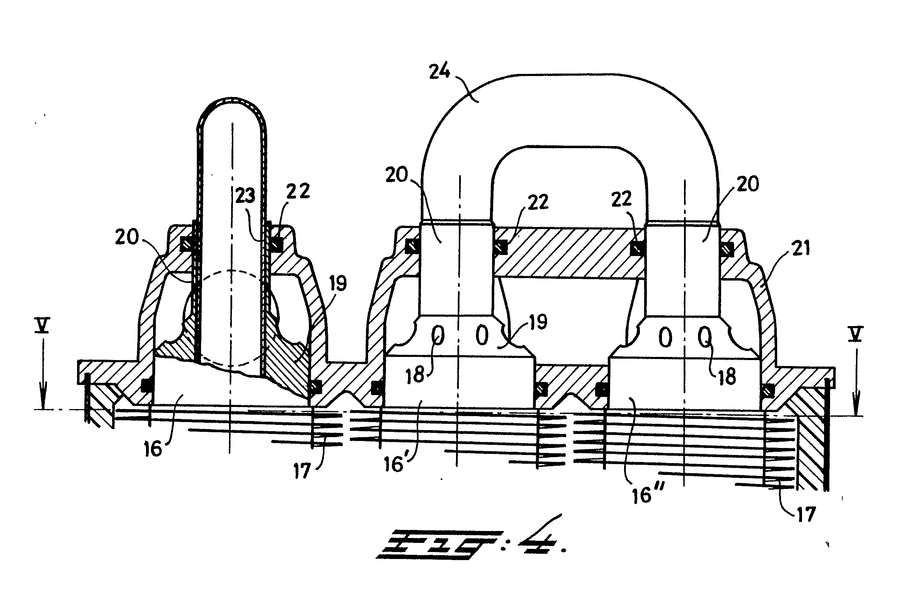

The pipe parts 10, 10' are provided on the outside with ribs 12, which in Figure 1 run transversely to the lengthwise direction of the pipe parts, but which can also extend in the lengthwise direction thereof, as shown in Figures 2 and 3.

The bend 11, which connects two parallel pipe parts 10, 10', extends beyond the connecting part 8 of the pipe lengths 6 and 6' of the heat exchanger 4. This means that the pipe parts 10 and 10' run through the connecting part 8, and the design thereof is shown in greater detail in Figures 2 and 3.

Figures 2 and 3 show an end of the pipe length 6, which is connected to the connecting part 8, which connecting part can be incorporated in the wall of the combustion chamber. The end of the pipe length 6 is sealed off from the connecting part 8 by means of an O-ring 13. The pipe part 10 for the tap water runs concentrically inside the pipe length 6 and is taken to the outside through an opening 14 in the connecting part 8, in which opening a sealing ring 15 is fitted.

In the embodiment shown in Figures 2 and 3, the pipe part 10 is provided with ribs 12 extending radially in the lengthwise direction of the pipe part, while the ribs 7 on the outside of the pipe length 6 run helically.

The pipe parts 10, 10' of the heat exchanger for tap water consist of a copper inner tube with connected around it an outside of an aluminum alloy. This construction meets the requirement that the pipe for tap water must be of copper, and aluminum and copper are incompatible in an oxygen-rich environment, due to a potential difference between the two metals.

As already said above, the cold heating medium comes into the heat exchanger 4 through the pipe parts of the heat exchanger which were last in contact with the flue gases. The advantage of this is that the flue gases can be cooled down to below their condensation temperature. Consequently, the infeed of cold tap water into the heat exchanger 9 is into the pipe part of this heat exchanger which are situated in the pipe length of the heat exchanger 4 which are last in contact with the flue gases. In other words, the heating medium and the tap water run through the pipe lengths in the same or almost the same sequence. If the heater is now used only for drawing hot water, the flue gases can also be cooled down to below their condensation temperature, so that the "high-efficiency" action of the heater also applies when it is being used as a geyser.

By means of the construction according to the invention one thus obtains not only a simple and compact unit, but also a "high-efficiency" tap water supply.

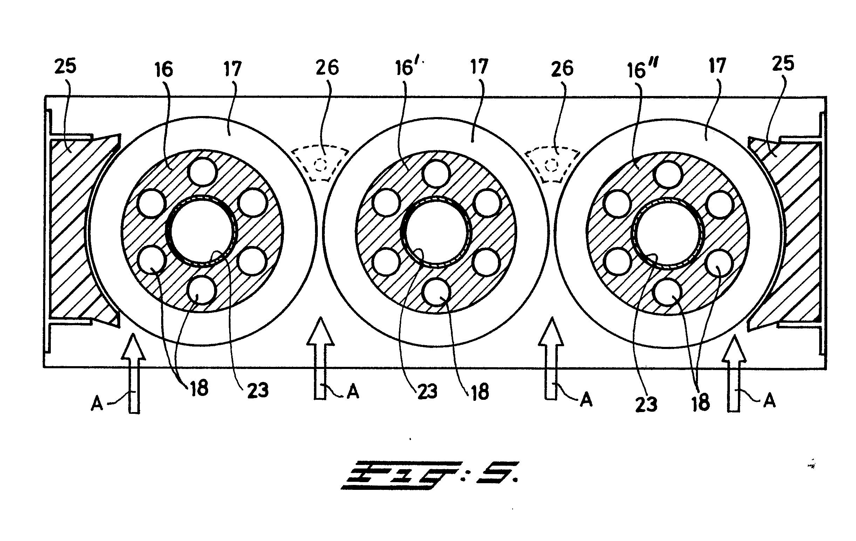

Figures 4 and 5 show another embodiment of the heater according to the invention. Instead of the heat exchanger made up of concentric pipes, the heat exchanger here consists of a number of parallel thick-walled pipe parts 16, 16' and 16'' which are provided on the outer periphery with helical ribs 17.

Disposed in the wall of each pipe length 16, 16', 16'' are a number of passages 18 extending in the lengthwise direction of the pipe length, and lying at regular intervals from each other. The passages 18 together form the channel for the heating medium in each pipe length.

The wall of each pipe length narrows at both ends by means of a tapering transition part 19 to a thin-walled part 20. The passages 18 debouch at the tapering transition part 19. The pipe lengths 16, 16' and 16'' are connected to each other by means of connecting parts 21 forming chambers and connecting together the passages 18 of two pipe lengths flowed through successively. The thin-walled part 20 of each pipe length runs through the connecting part and is sealed off from it by an O-ring 22.

The central passage of the thick-walled pipe length, which is intended for the passage of tap or utility water, is provided with a copper lining 23, which is rolled into the pipe length. The central passages of two pipe lengths flowed through successively are connected together by a copper bend 24 which thus lies outside the connecting part. This construction means that there is no contact either via the heating medium or via the tap water between the copper of the pipe for tap water and the aluminum alloy of the pipe lengths.

As can be seen more clearly from Figure 5, the pipe lengths are always placed side by side in one plane, and the heating medium and the tap water can run through each pipe length in countercurrent. The pipe lengths are preferably arranged in several planes running parallel to each other. The flue gases pass through the heat exchanger in the direction of the arrows A.

Disposed between the walls of the combustion chamber and the adjoining pipe length is a guide block 25, while guide blocks 26 are also disposed between each of the pipe lengths. The purpose of these blocks is to guide the flue gases between the ribs 17 of the pipe lengths, in order to ensure optimum heat transfer.

The heat from the flue gases is transferred via the thick wall both directly to the heating medium flowing in the passages 18 and directly to tap water flowing through the cenral channel, so that good heat transfer is always ensured to both media, while the compact structure of the heat exchanger is retained.

It will be clear that within the scope of the invention a large number of variants are possible as regards the number and arrangement of the concentric pipe parts and the connections between them.

## Claims

1. Heater (1) with tap water supply, comprising a combustion chamber (2) being provided with a burner (3) and having an outlet (5) for the flue gases, and in which combustion chamber is fitted a heat exchanger (4) for a heating medium, which consists of a number of parallel pipe lengths (6, 6') extending between two opposite walls of the combustion chamber and being connected to each other by means of connecting parts (8, 8') which form chambers, said pipe lengths being successively flowed through by the heating medium, while a number of these pipe lengths are provided with a pipe (10, 10') for tap water which extends coaxially herein, said pipes for tap water being connected together to form a throughgoing channel which is connected at one side to an infeed and at the other side to a discharge for tap water, characterized in that the pipes for tap water lying coaxially inside the particular pipe lengths each extend right through the connecting parts (8, 8') and are sealed off relative to said connecting parts, said pipes being connected to each other outside the connecting parts.

2. Heater acccording to Claim 1, characterized in that each pipe length, which contains a pipe for tap water, consists of a thick-walled pipe part (16, 16', 16'') which is provided with external ribs (17, 17', 17'') and has a central passage (23) which forms the channel for the tap water, the pipe part having at both ends a thin-walled part (20) with smaller diameter, and provision being made in the thick-walled part for a number of axial channels - (18) for the heating medium, which debouch on the outer periphery of the thin-walled parts into the chambers of the connecting parts (21) connected thereto, while the thin-walled parts extend right through said connecting parts.

3. Heater according to Claim 1, characterized in that each pipe length consists of a pipe provided externally with ribs (7), with a pipe for tap water lying coaxially herein, which is provided on the outer periphery with ribs (12) and always extends beyond the connecting parts (8, 8').

4. Heater according to Claim 1, 2 or 3, characterized in that each pipe length (6, 6'; 16, 16', 16'') is made of an aluminum alloy, and the pipe for the tap water is provided with an internal copper lining.

5. Heater according to one or more of the preceding Claims, characterized in that the infeed for tap water is connected to the pipe for tap water which is situated inside the pipe length which last comes into contact with the flue gases.

6. Heater according to one or more of the preceding Claims 1-5, characterized in that the pipe lengths are arranged in one or more planes running parallel to each other and guide blocks - (26) are disposed at least between the pipe lengths situated in the plane last flowed through by the flue gases, for the purpose of forcing the flue gases between the ribs of the pipe lengths.

7. Heat exchanger for a heater according to one or more of the preceding Claims 1-6, characterized in that it consists of a number of thick-walled parallel pipe lengths (16, 16', 16'') which are connected to each other by connecting parts (21) which form chambers and said pipe lengths have in their wall one or more axial passages (18) which debouch into the chambers of the connecting parts connecting hereto, and the central passage of each pipe which forms a channel for tap water is extended beyond the connecting parts, and said passages are connected together.

8. Heat exchanger according to Claim 7, characterized in that each pipe length is made of an aluminum alloy and the pipe for tap water is provided with an internal copper lining, and the various pipes for tap water are connected together by copper bends (24).

FIG. 1.

0 231 962

FIG: 2.

FIG: 3.

_Fig: 4._

0 231 962

25  16  17  26  16′  17  26  16″  17  25

A  18  23  A  23  18  A  A  23  18  A

*Fig. 5.*

0 231 962

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NL-A-7 809 671 (ROBERT BOSCH) <br> * Claim 1; figures * | 1,7 | F 24 H 1/22 |
| A | NL-C- 102 535 (ANDRE HUET) <br> * Figure 5 * | 1,7 | |
| A | DE-U-8 502 477 (VAILLANT) <br> * Figures * | 1,7 | |
| A | PATENT ABSTRACTS OF JAPAN, vol. 8, no. 227 (M-332)[1664], 18th October 1984; & JP-A-59 109 779 (FURUKAWA DENKI KOGYO K.K.) 25-06-1984 | 1,7 | |

TECHNICAL FIELDS SEARCHED (Int. Cl.4)

F 24 H
F 28 D

The present search report has been drawn up for all claims

| Place of search | Date of completion of the search | Examiner |
|---|---|---|
| THE HAGUE | 27-04-1987 | VAN GESTEL H.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82